Europäisches Patentamt

European Patent Office

Office européen des brevets

(11) Publication number: **0 121 673**
**B1**

## EUROPEAN PATENT SPECIFICATION

(45) Date of publication of patent specification: **10.02.88**

(51) Int. Cl.⁴: **F 04 D 19/04**

(21) Application number: **84101198.4**

(22) Date of filing: **06.02.84**

(54) **Turbomolecular vacuum pump.**

(30) Priority: **16.03.83 JP 42143/83**

(43) Date of publication of application:
**17.10.84 Bulletin 84/42**

(45) Publication of the grant of the patent:
**10.02.88 Bulletin 88/06**

(84) Designated Contracting States:
**DE FR GB**

(56) References cited:
**DE-A-3 314 001**
**DE-B-2 825 551**
**US-A-4 023 920**
**US-A-4 111 595**
**US-A-4 140 441**

(73) Proprietor: **HITACHI, LTD.**
**6, Kanda Surugadai 4-chome Chiyoda-ku**
**Tokyo 100 (JP)**

(72) Inventor: **Ueda, Shinjiro**
**2-20-2, Hakusan**
**Abiko-shi Chiba-ken (JP)**
Inventor: **Matsushita, Osamu**
**1639-16, Taira-machi Tomobe-machi**
**Nishiibaraki-gun Ibaraki-ken (JP)**
Inventor: **Tamura, Naoyuki**
**Fukauranishi Kasadogima**
**Kudamatsu-shi Yamaguchi-ken (JP)**
Inventor: **Miyatake, Yoshiteru**
**1-32-2-304, Nishinarusawa-cho**
**Hitachi-shi Ibaraki-ken (JP)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The invention relates to a turbomolecular vacuum pump having a casing, stator blades which are disposed in multistage fashion within the casing and in axial direction thereof, rotor blades which are located between the respectively adjacent stator blades and which are mounted on an outer periphery of a rotor situated centrally of the casing, a drive mechanism which drives a rotating member including the rotor, a supporting member which couples the casing and which supports the rotating member and the drive mechanism, a suction port and a discharge port which are respectively provided at an upper end and a lower end of the casing; wherein said rotating member is supported by a pivot type plain bearing comprising a pivot and a bearing saucer portion, and that a permanent magnet bearing is arranged between the end of said rotor on the discharge side of the pump and the supporting member.

Such a turbomolecular vacuum pump, which is described in DE—B—2 825 551 is provided with a pair of bearings consisting of a permanent magnet bearing and a pivot type plain bearing on the discharge side and on the suction side of the pump. Further, the driving mechanism comprising a rotor-stator-arrangement is installed in a space of the pump housing between the last stage of the pump and the lower bearing arrangement. Such a structure results in a housing with a very long extension. Further, the gas emission from the bearing arrangement on the high vacuum side is very high, which means that the vacuum is not as clean as desired.

It is the object of the invention to provide a turbomolecular vacuum pump which allows attaining clean ultra-high vacuum also at the stoppage of its operation with vibration-dynamical stability of operation.

This object is obtained in that at least the permanent magnet bearing is provided only on the discharge side of the pump, in that the drive mechanism of the rotating member is received within the rotor, in that only one pivot type plain bearing is provided and arranged in the space of the vacuum pressure of the discharge side, and in that the arrangement of the permanent magnetic bearing is such that there is a force $F_t$ in the thrust direction and a smaller force $F_r$ in the radial direction and a restoring force corresponding to a moment obtained by multiplying the force $F_t$ and the radius of the permanent magnetic bearing.

With the arrangement of the turbomolecular vacuum pump according to the invention, a very clean ultra-high vacuum can be obtained, as the permanent magnet bearing is arranged on the discharge side of the pump, which means that gas emissions cannot flow back through the pump stages to the high vacuum side. Further, by the arrangement of the driving mechanism with the pivot type plain bearing within the rotor, the whole length of the pump is determined by the number of stages of rotor and stator blades. Gas emissions, if any, of the lubricant of the pivot-type plain bearing are also held within the rotor, which is connected only with the discharge side of the pump.

Preferably at least one of constituents of the permanent magnet bearing is formed with circular portions concentric with the rotating member, an inner peripheral surface or an outer peripheral surface of the circular portion being spaced from the other constituent and coming in contact with the latter when said rotating member vibrates.

With this arrangement the one constituent of the permanent magnet bearing may be provided with grooves concentric with said rotating member, and the other constituent is inserted in the grooves with a spacing therebetween.

Advantageously the pivot type plain bearing is received within the rotor.

In a preferred embodiment of the turbomolecular vacuum pump according to the invention the motor rotor is mounted on a rotary shaft connected with the rotating member, a cylindrical member extends vertically from said supporting member concentrically with said rotary shaft, and a motor stator is disposed inside said cylindrical member opposite to said motor rotor.

With another preferred embodiment the motor rotor is disposed inside said rotor, a cylindrical member extends from the supporting member concentrically with the motor rotor, and a motor stator is disposed outside of the cylindrical member opposite to the motor rotor. In this embodiment the bearing saucer portion of said pivot type plain bearing may extend upwards along the inner side of said cylindrical member.

It is also convenient that a cylindrical member extends vertically from said supporting member of said rotating member along an inner periphery of said rotor, that said rotating member is supported by said pivot type plain bearing at an upper part of said cylindrical member, and that a motor stator is disposed at an upper end of said cylindrical member, while an end plate is disposed at a part of said rotating member opposite to said motor stator.

Conveniently the pivot type plain bearing is immersed in a lubricating oil whose vapor pressure is below $1.3 \cdot 10^{-8}$ Pa at the normal temperature.

As pointed out, according to the invention the arrival degree of vacuum can be enhanced with vibration-dynamical stability, and the reverse diffusion of oil vapor to a high vacuum side can be reliably prevented during the stoppage of an operation because lubricating oil of low vapor pressure can be utilized. According to the embodiments, the permanent-magnet magnetic bearing is arranged on a low vacuum side, which can bring forth the excellent effect that the influence of an emission gas due to baking does not extend to the high vacuum side and a vacuum device, and the formation of clean ultra-high vacuum is achieved.

Embodiments of the invention are described in the following by means of drawings.

Figure 1 is a vertical sectional view showing an embodiment of a turbomolecular vacuum pump of this invention;

Figure 2 is a schematic view for explaining the restoring force of a rotating member in Figure 1; and

Figures 3 and 4 are vertical sectional views each showing another embodiment of the turbomolecular vacuum pump of this invention.

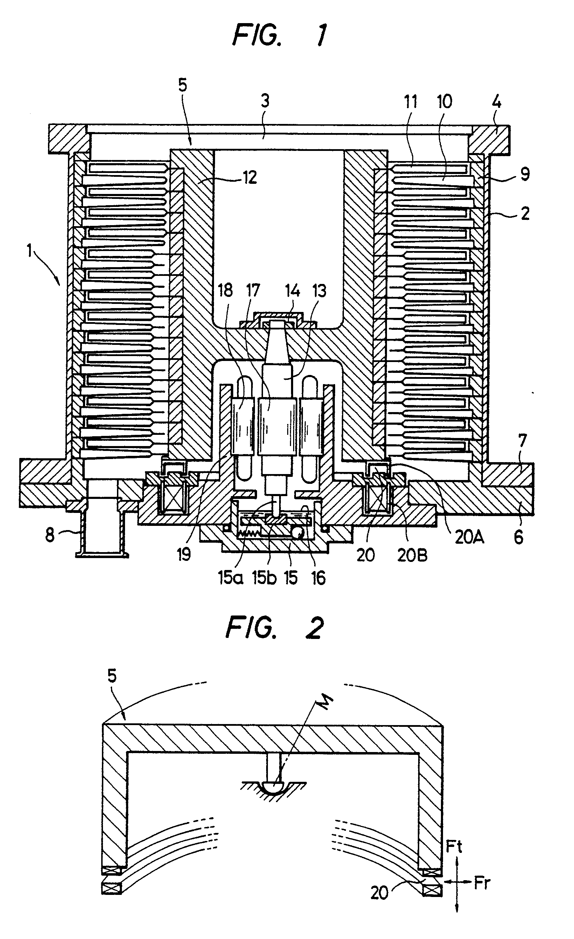

In Figure 1, numeral 1 designates a turbomolecular vacuum pump. The upper part of a cylindrical casing 2 is provided with a suction port 3, in front of which a vacuum device (not shown) to be evacuated is coupled by a flange 4. A supporting member 6 for a rotating member 5 is coupled to the lower part of the casing 2 by a flange 7, and it is provided with a discharge port 8. In the casing 2, stator blades 10 are stacked through spacers 9 in multistage fashion in the direction of the axis thereof, and rotor blades 11 are arranged between the adjacent ones of the stator blades 10.

The rotor blades 11 are fixed to the outer periphery of a rotor 12 which is located centrally of the casing 2. The rotor 12 is unitarily coupled with a rotary shaft 13 by a nut 14, and constitutes the rotating member 5. This rotating member 5 is supported at its lower part by a pivot type plain bearing 15 having, for example, a movable saucer. The pivot type plain bearing 15 includes a pivot 15a and a bearing piece 15b, which are immersed in lubricating oil 16. By applying the pivot type plain bearing 15, oil of low vapor pressure and high viscosity can be used as the lubricating oil.

Since, in general, the pivot type plain bearing bears a shaft of small diameter, the peripheral speed of the shaft is low and the quantity of heat generation due to loss is small. Accordingly, it undergoes less heat generation due to loss as compared with a ball bearing under the conditions of equal loads and equal rotational frequencies, and it permits the use of the lubricating oil which exhibits a low vapor pressure and a high viscosity, for example, fluoric oil whose vapor pressure at the normal temperature is below $1.3 \cdot 10^{-8}$ Pa.

A motor rotor 17 is mounted on the rotary shaft 13, and a motor stator 18 opposing thereto is disposed inside a cylindrical member 19 which extends from the supporting member 6 of the rotating member 5. Permanent magnets 20A and 20B, which constitute a permanent-magnet magnetic bearing 20, are respectively fixed to the lower end of the rotor 12 and that part of the supporting member 6 of the rotating member 5 which opposes thereto. Accordingly, the rotating member forms a structure whose fulcrum is the pivot type plain bearing. The outline of this structure is shown in Figure 2. An attractive force Ft in the thrust direction acts on the magnetic bearing 20, and a force of about 20% acts as a restoring force Fr in the radial direction, so that the relation of $Ft \gg Fr$ holds. When, under this state, the rotating member 5 inclines and vibrates in a mode M, a restoring force to erect the inclining rotating member 5 back to the original coaxial position becomes Ft, and the great force Ft in the thrust direction can be utilized as the restoring force against the deviation of the rotating member 5. The restoring force corresponds to a moment obtained by multiplying the force Ft in the thrust direction and the approximate radius of the magnetic bearing, and can be set at a very large value. The adoption of this structure permits the stable fast rotation of the rotating member system. Besides, the permanent magnet 20B constituting the magnetic bearing 20 is provided with circular portions or grooves concentric with the rotating member 5, and parts of the permanent magnet 20A are inserted in the grooves with a radial spacing therebetween.

Thus, when the rotating member 5 is vibrated by abnormal vibrations ascribable to a disturbance such as earthquake, the inner peripheral surface or outer peripheral surface of the permanent magnet 20A comes into touch with the groove of the permanent magnet 20B so as to protect the rotating member 5. When the abnormal vibrations are released, a gyro effect is induced in the rotating member 5 so as to return it to the center of the normal rotation, and the rotating member can be continuously operated safely.

With the above construction, when the vacuum device not shown is connected in front of the suction port 3 and the motor stator is energized, the rotating member 5 is rotated at high speed as predetermined, and the turbomolecular vacuum pump starts operating to execute suction, compression and exhaust. It begins baking at a predetermined temperature, and establishes high vacuum. Meantime, the suction gas is compressed by the turbine compression action of the movable vanes 11 and the opposing stationary vanes 10 and then discharged from the discharge port 8 to the next stage.

Since the pivot type plain bearing can use oil of very low vapor pressure as the lubricating oil, the reverse diffusion of the oil vapor to the high vacuum side hardly occurs during the stoppage of the operation. Accordingly, clean vacuum is held. In general, the permanent-magnet magnetic bearing is large in the quantity of emission gas, but it is installed on the low vacuum side herein. Therefore, even when the gas is emitted due to the high temperature baking, no influence is exerted on the high vacuum side, and the formation of an ultra-high degree of vacuum is ensured. Preferably, the permanent-magnet magnetic bearing is made of a rare-earth magnet material of high Curie point which can be treated at high temperatures.

Even when the baking is carried out at approximately 300°C, the high vacuum side is not affected by the attendant gas emission from the permanent-magnet magnetic bearing, as described above, and the interior of the vacuum device can be brought to ultra-high vacuum of a degree of at least $1.3 \cdot 10^{-9}$ Pa.

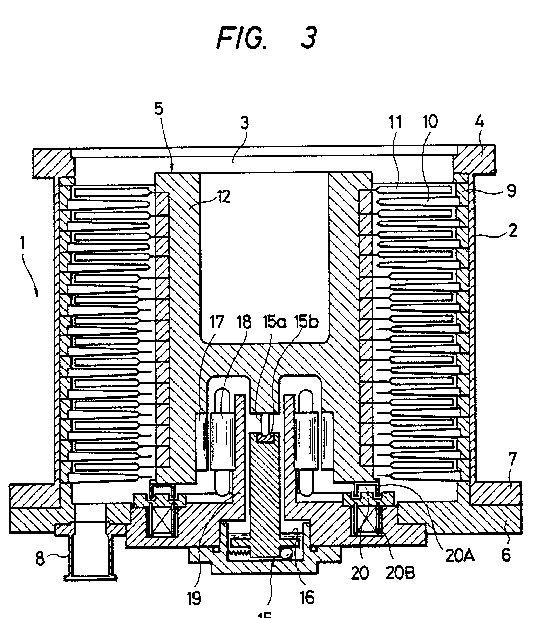

Figure 3 shows another embodiment of this invention. The motor stator 18 is disposed outside the cylindrical member 19, and the motor rotor 17 is mounted on that surface of the rotor 12 which opposes to the stator 18. The bearing piece 15b of the pivot type plain bearing 15 is constructed on an upward extension. Although this embodiment is basically the same as the preceding embodiment, it can remove the rotary shaft for the motor by adopting the so-called outer rotor structure which has the motor rotor inside the rotor, and hence, it has the effect that the construction can be simplified. Another effect is that, since the pivot type plain bearing 15 can be shifted upwards, the stable fast rotation of the rotating member 5 is permitted.

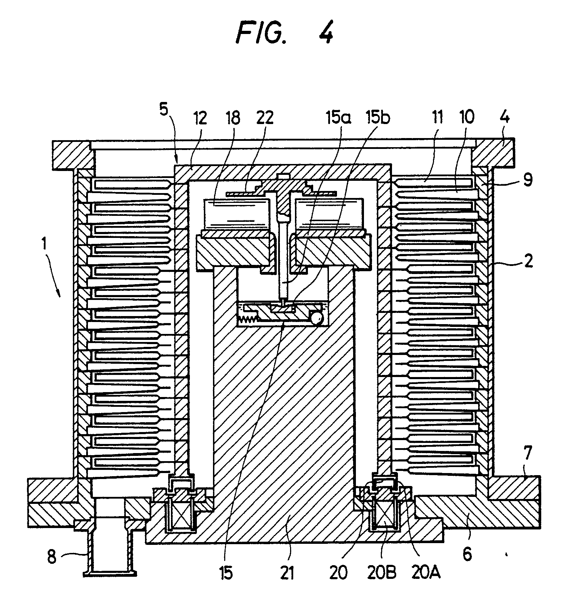

Figure 4 shows still another embodiment of this invention. A cylindrical member 21 is extended on the supporting member 6 of the rotating member 5 along the inner periphery of the rotor 12, and the bearing piece 15b of the pivot type plain bearing 15 is disposed at the upper part of this cylindrical member 21, thereby to support the rotating member 5. The motor stator 18 is mounted on the upper end of the cylindrical member 21, and an end plate 22 fixed to the rotor 12 constitute an end plate motor.

Owing to the construction as stated above, while the drive mechanism of the rotating member 5 is more simplified, the stable fast rotation is permitted, and the achievement of the ultra-high vacuum is facilitated.

**Claims**

1. A turbomolecular vacuum pump (1) having a casing (2), stator blades (10) which are disposed in multistage fashion within the casing (1) and in axial direction thereof, rotor blades (11) which are located between the respectively adjacent stator blades (10) and which are mounted on an outer periphery of a rotor (12) situated centrally of the casing (2), a drive mechanism which drives a rotating member (5) including the rotor (12), a supporting member (6) which couples the casing (2) and which supports the rotating member (5) and the drive mechanism (13, 17), a suction port (3) and a discharge port (8) which are respectively provided at an upper end and a lower end of the casing (2); wherein said rotating member (5) is supported by a pivot type plain bearing (15) comprising a pivot (15a) and a bearing saucer portion (15b), and that a permanent magnet bearing (20) is arranged between the end of said rotor (12) on the discharge side of the pump and the supporting member (6) — characterized in that at least the permanent magnet bearing (20) is provided only on the discharge side of the pump, in that the drive mechanism (13, 17, 18, 21) of the rotating member (5) is received within the rotor (12), in that only one pivot type plain bearing (15) is provided and arranged in the space of the vacuum pressure of the discharge side, and in that the arrangement of the permanent magnetic bearing (20) is such that there is a force $F_t$ in the

thrust direction and a smaller force $F_r$ in the radial direction and a restoring force corresponding to a moment obtained by multiplying the force $F_t$ and the radius of the permanent magnetic bearing (20).

2. A turbomolecular vacuum pump according to Claim 1, characterized in that at least one of constituents (20B) of the permanent magnet bearing (20) is formed with circular portions concentric with the rotating member (5), an inner peripheral surface or an outer peripheral surface of the circular portion being spaced from the other constituent (20A) and coming in contact with the latter when said rotating member (5) vibrates.

3. A turbomolecular vacuum pump according to Claim 2, characterized in that the one constituent (20B) of the permanent magnet bearing (20) is provided with grooves concentric with said rotating member (5), and in that the other constituent (20A) is inserted in the grooves with a spacing therebetween.

4. A turbomolecular vacuum pump according to one of the Claims 1 to 3, characterized in that the pivot type plain bearing (15) is received within the rotor (12).

5. A turbomolecular vacuum pump according to one of the Claims 1 to 3, characterized in that a motor rotor (17) is mounted on a rotary shaft (13) connected with the rotating member (5), that a cylindrical member (19) extends vertically from said supporting member (6) concentrically with said rotary shaft (13), and that a motor stator (18) is disposed inside said cylindrical member (19) opposite to said motor rotor (17) (Figure 1).

6. A turbomolecular vacuum pump according to one of the Claims 1 to 3, characterized in that a motor rotor (17) is disposed inside said rotor (12), that a cylindrical member (19) extends from the supporting member (6) concentrically with the motor rotor (17), and that a motor stator (18) is disposed outside of the cylindrical member (19) opposite to the motor rotor (17) (Figure 3).

7. A turbomolecular vacuum pump according to Claim 6, characterized in that the bearing saucer portion (15b) of said pivot type plain bearing (15) extends upwards along the inner side of said cylindrical member (19).

8. A turbomolecular vacuum pump according to one of the Claims 1 to 4, characterized in that a cylindrical member (21) extends vertically from said supporting member (6) of said rotating member (5) along an inner periphery of said rotor (12), that said rotating member (5) is supported by said pivot type plain bearing (15) at an upper part of said cylindrical member (21), and that a motor stator (18) is disposed at an upper end of said cylindrical member (21), while an end plate (22) is disposed at a part of said rotating member (5) opposite to said motor stator (18) (Figure 4).

9. A turbomolecular vacuum pump according to one of the Claims 1 to 8, characterized in that the pivot type plain bearing (15) is immersed in a lubricating oil whose vapor pressure is below $1.3 \cdot 10^{-8}$ Pa at the normal temperature.

## Patentansprüche

1. Turbomolekular-Vakuumpumpe (1) mit einem Gehäuse (2), mit Statorschaufeln (10), die in mehrstufiger Weise in dem Gehäuse (1) und in seiner Axialrichtung angeordnet sind, mit Rotorschaufeln (11), die zwischen den jeweils angrenzenden Statorschaufeln (10) angeordnet und an einem Außenumfang eines zentral im Gehäuse (2) gelegenen Rotors (12) angebracht sind, mit einem Antriebsmechanismus, der ein den Rotor (12) einschließendes rotierendes Element (5) antreibt, mit einem Halteelement (6), das mit dem Gehäuse (2) verbunden ist und das rotierende Element (5) und den Antriebsmechanismus (13, 17) abstützt, mit einer Ansaugöffnung (3) und einer Abgabeöffnung (8), die an einem oberen Ende bzw. einem unteren Ende des Gehäuses (2) vorgesehen sind, wobei das rotierende Element (5) von einem Stützzapfenlager (15) mit einem Stützzapfen (15a) und einem Lagerpfannenabschnitt (15b) gehalten wird und ein Permanentmagnetlager (20) zwischen dem Ende des Rotors (12) auf der Abgabeseite der Pumpe und dem Halteelement (6) angeordnet ist, dadurch gekennzeichnet, daß wenigstens das Permanentmagnetlager (20) nur auf der Abgabeseite der Pumpe vorgesehen ist, daß der Antriebsmechanismus (13, 17, 18, 21) des rotierenden Elements (5) in dem Rotor (12) aufgenommen ist, daß nur ein Stützzapfenlager (15) vorgesehen und in dem Raum des Vakuumdrucks auf der Abgabeseite angeordnet ist, und daß die Anordnung des Permanentmagnetlagers (20) so getroffen ist, daß eine Kraft $F_t$ in Axialrichtung und eine kleinere Kraft $F_r$ in Radialrichtung sowie eine Rückstellkraft vorhanden sind, die einem Moment entspricht, das durch Multiplizieren der Kraft $F_t$ mit dem Radius des Permanentmagnetlagers (20) erhalten wird.

2. Turbomolekular-Vakuumpumpe nach Anspruch 1, dadurch gekennzeichnet, daß wenigstens einer der Bauteile (20B) des Permanentmagnetlagers (20) mit kreisförmigen, zu dem rotierenden Element (5) konzentrischen Abschnitten versehen ist, wobei eine innere Umfangsfläche oder eine äußere Umfangsfläche des kreisförmigen Abschnitts im Abstand von dem anderen Bauteil (20A) angeordnet ist und in Kontakt mit dem letzteren kommt, wenn das rotierende Element (5) fibriert.

3. Turbomolecular-Vakuumpumpe nach Anspruch 2, dadurch gekennzeichnet, daß der eine Bestandteil (20B) des Permanentmagnetlagers (20) mit zu dem drehenden Element (5) konzentrischen Nuten versehen ist, und daß der andere Bauteil (20A) in die Nuten mit einem Abstand dazwischen eingesetzt wird.

4. Turbomolecular-Vakuumpumpe nach einem der Ansprüche 1 bis 3, dadurch gekennzeichnet, daß das Stützzapfenlager (15) in dem Rotor (12) aufgenommen ist.

5. Turbomolekular-Vakuumpumpe nach einem der Ansprüche 1 bis 3, dadurch gekennzeichnet, daß ein Motorrotor (17) an einer Drehwelle (13) angebracht ist, die mit dem rotierenden Element (5) verbunden ist, daß sich vertikal von dem Halteteil (6) konzentrisch zu der Drehwelle (13) ein zylindrisches Element (19) erstreckt und daß ein Motorstator (18) innerhalb des zylindrischen Elements (19) dem Motorrotor (17) gegenüberliegend angeordnet ist (Fig. 1).

6. Turbomolekular-Vakuumpumpe nach einem der Ansprüche 1 bis 3, dadurch gekennzeichnet, daß innerhalb des Rotors (12) ein Motorrotor (17) angeordnet ist, daß sich von dem Halteelement (6) konzentrisch zu dem Motorrotor (17) ein zylindrisches Element (19) erstreckt und daß ein Motorstator (18) außerhalb des zylindrischen Elements (19) dem Motorrotor (17) gegenüberliegend angeordnet ist (Fig. 3).

7. Turbomolekular-Vakuumpumpe nach Anspruch 6, dadurch gekennzeichnet, daß der Lagerpfannenabschnitt (15b) des Stützzapfenlagers (15) sich nach oben längs der Innenseite des zylindrischen Elements (19) erstreckt.

8. Turbomolekular-Vakuumpumpe nach einem der Ansprüche 1 bis 4, dadurch gekennzeichnet, daß sich ein zylindrisches Element (21) vertikal von dem Halteelement (6) des rotierenden Elements (5) längs eines Innenumfangs des Rotors (12) erstreckt, daß das rotierende Element (5) von dem Stützzapfenlager (15) an einem oberen Teil des zylindrischen Elements (21) gehalten ist und daß ein Motorstator (18) an einem oberen Ende des zylindrischen Elements (21) angeordnet ist, während eine Stirnplatte (22) an einem Teil des rotierenden Elements (5) angeordnet ist, die dem Motorstator (18) gegenüberliegt (Fig. 4).

9. Turbomolekular-Vakuumpumpe nach einem der Ansprüche 1 bis 8, dadurch gekennzeichnet, daß das Stützzapfenlager (15) in ein Schmieröl untergetaucht ist, dessen Dampfdruck bei Normaltemperatur unter $1{,}3 \cdot 10^{-8}$ Pa liegt.

## Revendications

1. Pompe à vide turbomoléculaire (1) comportant un carter (2), des pales de stator (10), qui sont disposées sur plusieurs étages à l'intérieur du carter (1) et dans une direction axiale de ce dernier, des pales de rotor (11) qui sont situées entre les pales de stator (10) respectivement voisines et qui sont montées sur un pourtour extérieur d'un rotor (12) installé au centre du carter (2), un mécanisme d'entraînement qui entraîne un organe rotatif (5) incluant le rotor (12), un organe de support (6) qui est accouplé au carter (2) et qui supporte l'organe rotatif (5) et le mécanisme d'entraînement (13, 17), un orifice d'aspiration (3) et un orifice de refoulement (8), qui sont prévus respectivement sur une extrémité supérieure et sur une extrémité inférieure du carter (2); ledit organe rotatif (5) étant supporté par un palier lisse du type à pivot (15) comprenant un pivot (15a) et une partie (15b) formant coupelle de support de palier, tandis qu'un palier à aimants permanents (20) est disposé entre l'extrémité dudit rotor (12) sur le côté refoulement de la pompe, et l'organe de support (6) — caractérisée en ce qu'au moins le palier à aimants permanents (20) est prévu uniquement sur le côté refoulement de la pompe, que le mécanisme d'entraînement (13, 17, 18, 21) de l'organe rotatif (5) est logé à l'intérieur du rotor (12), qu'un seul palier lisse du type à pivot (15) est prévu et disposé dans l'espace en dépression du côté refoulement, et que l'agencement du palier à aimants permanents (20) est tel qu'il s'exerce une force $F_t$ dans la direction de poussée et une force plus faible $F_r$ dans la direction radiale et une force de rétablissement correspondant à un moment obtenu en multipliant la force $F_t$ par le rayon du palier à aimants permanents (20).

2. Pompe à vide turbomoléculaire selon la revendication 1, caractérisée en ce qu'au moins l'un des constituants (20B) du palier à aimants permanents (20) est formé par des parties circulaires concentriques à l'organe rotatif (5), une surface périphérique intérieure ou une surface périphérique extérieure de la partie circulaire étant espacée de l'autre constituant (20A) et venant en contact avec ce dernier lorsque ledit organe rotatif (5) vibre.

3. Pompe à vide turbomoléculaire selon la revendication 2, caractérisée en ce qu'un constituant (20B) du palier à aimants permanents (20) comporte des gorges concentriques audit organe rotatif (5), en ce que l'autre constituant (20A) est inséré dans les gorges moyennant la présence d'un espacement entre lui-même et les gorges.

4. Pompe à vide turbomoléculaire selon l'une des revendications 1 à 3, caractérisée en ce que le palier lisse du type à pivot (15) est logé dans le rotor (12).

5. Pompe à vide turbomoléculaire selon l'une des revendications 1 à 3, caractérisée en ce qu'un rotor (17) d'un moteur est monté sur un arbre rotatif (13) raccordé à l'organe rotatif (5), qu'un organe cylindrique (19) s'étend verticalement à partir dudit organe de support (6) concentriquement audit arbre rotatif (13) et qu'un stator (18) du moteur est disposé à l'intérieur dudit organe cylindrique (19) en vis-à-vis dudit rotor (17) du moteur (figure 1).

6. Pompe à vide turbomoléculaire selon l'une des revendications 1 à 3, caractérisée en ce qu'un rotor (17) d'un moteur est disposé à l'intérieur dudit rotor (12), qu'un organe cylindrique (19) s'étend à partir de l'organe de support (6) concentriquement au rotor (17) du moteur et qu'un stator (18) du moteur est disposé à l'extérieur de l'organe cylindrique (19) en vis-à-vis du rotor (17) du moteur (figure 3).

7. Pompe à vide turbomoléculaire selon la revendication 6, caractérisée en ce que la partie (15b) formant coupelle de support de palier dudit palier lisse du type à pivot (15) s'étend vers le haut le long de la face intérieure dudit organe cylindrique (19).

8. Pompe à vide turbomoléculaire selon l'une des revendications 1 à 4, caractérisée en ce qu'un organe cylindrique (21) s'étend verticalement à partir dudit organe de support (6) dudit organe rotatif (5) le long d'un pourtour intérieur dudit rotor (12), que ledit organe rotatif (5) est supporté par ledit palier lisse du type à pivot (15), au niveau d'une partie supérieure dudit organe cylindrique (21), et qu'un stator (18) d'un moteur est disposé sur une extrémité supérieure dudit organe cylindrique (21), tandis qu'une plaque d'extrémité (22) est disposée dans une partie dudit organe rotatif (5) située en vis-à-vis dudit stator (18) du moteur (figure 4).

9. Pompe à vide turbomoléculaire selon l'une des revendications 1 à 8, caractérisée en ce que le palier lisse du type à pivot (15) est immergé dans une huile lubrifiante, dont la pression de vapeur est inférieure à $1,3 \cdot 10^{-8}$ Pa à la température normale.

## FIG. 1

## FIG. 2

# FIG. 3

**0 121 673**

## FIG. 4